# EUROPÄISCHE PATENTANMELDUNG

(11) **EP 1 578 102 A1**
(43) Veröffentlichungstag der Anmeldung: **21.09.2005**
(21) Anmeldenummer: 05003978.3
(22) Anmeldetag: 24.02.2005
(51) Int. Cl.: H04M 3/436, H04M 3/533

(54) **Anrufererkennung mittels Sprachmuster um personnenbezogene Dienste zu steuern**

(30) Priorität: 16.03.2004 DE 102004013862
(71) Anmelder: Deutsche Telekom AG, 53113 Bonn (DE)
(72) Erfinder: Trinkel, Marian, Dipl.-Ing., 52372 Kreuzau OT Untermaubach (DE); Müller, Christel, Dipl.-Ing., 15732 Schulzendorf (DE); Daussmann, Frank, 67454 Hassloch (DE)

(57) **Zusammenfassung**

Die Erfindung betrifft ein Verfahren zur Steuerung eines Telekommunikationssystems in/an einem Telekommunikationsnetz (1) oder sprachboxbasierter Dienste (2), wobei bei einer Kommunikationsverbindung zwischen einem Anrufer (A,B,C,D) und dem Telekommunikationssystem der Anrufer anhand seiner Stimme erkannt wird und in Abhängigkeit einer Erkennung ein Dienst aktiviert wird. Die Erfindung betrifft weiterhin ein Telekommunikationssystem mit Sprachboxen.

## Beschreibung

Die Erfindung betrifft ein Verfahren zur Steuerung eines Telekommunikationssystems in/an einem Telekommunikationsnetz und/oder sprachboxbasierter Dienste. Die Erfindung betrifft weiterhin ein Telekommunikationssystem umfassend wenigstens ein Telekommunikationsnetz mit wenigstens einer Sprachbox.

Sprachboxen sind im Stand der Technik bekannt. Beispielsweise werden sie netzintern oder endgeräteseitig in Form von Anrufbeantwortern eingesetzt. Typisches Anwendungsgebiet ist es, einem Anrufer bei einer Abwesenheit oder Nichterreichbarkeit des Angerufenen die Möglichkeit zu erschließen eine Nachricht für den Angerufenen zu hinterlassen, so dass dieser wichtige Informationen oder Kenntnis über den Anruf erhält und ggf. zurückrufen kann.

Hierfür erhält der Anrufer oftmals einen Ansagetext vorgesprochen an dessen Ende der Anrufer aufgefordert wird, die Nachricht zu hinterlassen. Der Ansagetext wird normalerweise von dem Betreiber der Sprachbox bereitgestellt, dass heißt zum Abruf aufgesprochen.

Ebenfalls ist es bereits im Stand der Technik bekannt, in einer Sprachbox mehrere Ansagetexte bereitzuhalten, die in Abhängigkeit des anrufenden Telekommunikationsgerätes vorgsprochen werden und mit deren Hilfe der Anrufer eine ausgewählte Nachricht erhält.

Diese Anwendung beruht darauf, dass einem Kommunikationsgerät oder -anschluß eine Geräte- oder Anschlußkennung zugeordnet ist, die bei einem Anruf übermittelt und von der angerufenen Sprachbox erkannt werden kann. Anhand dieser erkannten Anschlußkennung kann dann die Sprachbox einen der vorliegenden Ansagetexte abspielen. Bei einer solchen Anschlußkennung kann es sich um eine Rufnummer (CLI-Call Line Identity, HLR-Home Location Register) oder auch sonstige Netzadresse (IP-Adresse) handeln.

Problematisch ist es hierbei, dass die Auswahl des Ansagetextes nur anhand der übermittelten Anschlußkennung erfolgt. Eine Individualisierung bezogen auf die tatsächlich anrufende Person kann nicht erfolgen. Dies ist insbesondere von Nachteil, wenn mehrere Personen denselben Telekommunikationsanschluß oder dasselbe Telekommunikationsgerät einsetzen. Es besteht so keine Möglichkeit eine individuelle Nachricht nur für eine bestimmte Person in der Sprachbox für den Fall der Abwesenheit zu hinterlassen oder mit Bezug auf die bestimmte Person einen gewünschten Dienst zu aktivieren, wie z.B. eine Weitervermittlung etc., z.B. in Form einer personalisierten Sprachpinwand.

Aufgabe der Erfindung ist es, eine Steuerung für Telekommunikationssystem, insbesondere für eine Sprachbox und ein System mit einer Sprachbox bereitzustellen, mittels denen eine personenbezogene Individualisierung zu aktivierender Dienste, wie z.B. Ansagen, Weitervermittlungen etc. ermöglicht wird.

Diese Aufgabe wird dadurch gelöst, dass bei einer Kommunikationsverbindung zwischen einem Anrufer und dem Telekommunikationssystem der Anrufer anhand seiner Stimme erkannt wird und in Abhängigkeit einer Erkennung ein Dienst aktiviert wird. Hierbei kann es sich bevorzugt bei dem Telekommunikationssystem um ein solches System handeln, welches eine Sprachbox bildet bzw. deren Funkionen bietet.

Die Erfindung beruht auf dem Prinzip, dass ein Mensch nahezu eindeutig anhand seiner Stimme erkannt werden kann, selbst wenn die betreffende Person beim Sprechen die Stimme zu verstellen versucht. Eine Erkennung einer anrufenden Person durch ein solches Telekommunikationssystem, insbesondere z.B. eine Sprachbox kann daher anhand der Stimme bzw. Sprache der anrufenden Person eindeutig oder mit hoher Sicherheit erfolgen, so dass sich mit Hilfe der erfindungsgemäßen Lösung die Möglichkeit erschließt, personenbezogene Dienste durch die Sprachbox zu aktivieren. Ein Personenbezug kann sich z.B. dadurch ergeben, dass der Person ein Service- und/oder Erkennungsprofil zugeordnet ist.

Hierfür kann es im Rahmen der Erfindung vorgesehen sein, dass eine Stimm- oder Sprachanalyse durchgeführt wird. Diese Maßnahmen sind dem Fachmann bekannt, beispielsweise unter Zuhilfenahme von Sonogrammen, Fouriertransformationen etc. Dementsprechend kann unter der Erkennung im Rahmen dieser Erfindung eine Identifikation und/oder Verifikation und/oder Klassifikation der Sprache/Stimme eine Anrufers verstanden werden.

Mittels der erfindungsgemäßen Lösung kann es vorgesehen sein, dass bei einer Erkennung der anrufenden Person, d.h. einer Zuordnung der Stimme/Sprache zu einer Person oder zumindest zu einer Personengruppe ein personenbezogener Dienst aktiviert wird.

Dieser Dienst kann z. B. beinhalten, dass dem Anrufer eine spezielle nur für diese Person oder Personengruppe bestimmte vertrauliche Nachricht durch das Telekommunikationssystem, insbesondere die Sprachbox übermittelt wird, beispielsweise, wenn der Angerufene nicht erreichbar ist oder nicht erreichbar sein möchte.

Das Telekommunikationssystem/die Sprachbox kann in einer anderen bevorzugten Anwendung auch als Personenfilter eingesetzt werden, um z.B. Anrufer abzublocken und nur eine gewünschte Person/Personengruppe an den Angerufenen weiterzuvermitteln. Verläuft eine Erkennung (Identifikation/Verifikation/Klassifikation) negativ, d.h. erfolgt keine Personenerkennung, so kann beispielsweise ein Standartdienst aktiviert werden, wie eine Ansage, die von üblichen Anrufbeantwortern bekannt ist, wonach der Anrufer eine Nachricht hinterlassen kann, wenn er dies wünscht.

Gegenüber dem Stand der Technik, wo nur eine anschluß- oder gerätebezogene Individualisierung" möglich ist, ergibt sich gemäß der Erfindung tatsächlich eine personenbezogene zumindest personengruppenbezogene Individualisierung, wobei es insbesondere unerheblich ist, von welchen Anschluß oder mit welchem Gerät der Anrufer den Anruf tätigt. Es kann jedoch gemäß einer Ausführung der Erfindung ergänzend vorgesehen sein, neben der Erkennung anhand der Stimme/Sprache ebenfalls eine Anschlußkennung des von dem Anrufer verwendeten Anschlusses oder des Gerätes mit einfließen zu lassen. Bei einer solchen Anschlußkennung kann es sich z.B. um eine Rufnummer (CLI-Call Line Identity, HLR-Homne Location Register) oder auch ein IP-Adresse handeln.

Zur Durchführung des Erkennungsverfahrens kann es gemäß der Erfindung vorgesehen sein, dass das Telekommunikationssystem, bevorzugt die Sprachbox, zunächst gegenüber dem Anrufer eine Ansage durchführt mit der der Anrufer gebeten wird eine Nachricht für den Angerufenen zu hinterlassen, beispielsweise bekanntermaßen nach einem hinter der Ansage folgenden Schlußton.

Kommt der Anrufer der Bitte eine Nachricht zu hinterlassen nach, oder spricht er bereits während der ersten Ansage, so kann eine Spracherkennung netzintern oder geräteintern gestartet werden, je nachdem wo und wie das Telekommunikationssystem / die Sprachbox betrieben wird. Es kann dann im Anschluß oder nach Abbruch der ersten Ansage eine an die anrufende Person individuell im System hinterlassene Nachricht übermittelt werden oder ein anderer Dienst aktiviert werden.

So besteht auch mittels der Erfindung die Möglichkeit, den Betreiber des Telekommunikationssystems / der Sprachbox, also den Angerufenen selbst zu erkennen, um diesem z.B. die Fernabfrage seines Anrufbeantworters zu ermöglichen, was derzeit gemäß dem Stand der Technik durch eine Tonwahlidenifizierung z.B. mittels PIN (Persönliche Identifikations Nummer) erfolgt. Die Erkennung der anrufenen Person anhand seiner Stimme kann somit auch als Sprach- oder Stimmpassworterkennung zur Nutzung privilegierter Dienste eingesetzt werden.

Die Erkennung kann gemäß der Erfindung bevorzugt dadurch erfolgen, dass die Sprache bzw. Stimme des Anrufers mit wenigstens einer in oder für das Telekommunikationssystem bzw. bevorzugt Sprachbox hinterlegten Sprachprobe bzw. Stimmprobe verglichen wird.

Hier ist darauf hinzuweisen, dass im Rahmen der Erfindung die Begriffe Sprache und Stimme im wesentlichen synonym verwendet werden, da es bei der Erkenung eines Anrufers nicht auf den Inhalt des gesprochenen Wortes ankommt, sondern auf die sprach/stimm-biometrischen Merkmale des Anrufers.

Gemäß der Erfindung kann es vorgesehen sein, dass wenigstens eine Sprachprobe in einer Datenbank gespeichert ist/wird. Die Datenbank kann direkt geräteintern in einem solchen Telekommunikationsystem, z.B. einer Sprachbox wie einem Anrufbeantworter vorgehalten werden oder z.B. auch netzintern oder bei einem anderen Dienstleister. Mit der Speicherung der Sprachproben kann auch ein Trustcenter bauftragt sein, wo die Datenbank gehostet ist.

Die Sprachprobe kann einer bestimmten Person oder Personengruppe (z.B. Kinder, Männer, Frauen etc.) zugeordnet sein oder zugeordnet werden. So kann z.B. ein Anrufer aufgrund der Spracherkennung zumindest in eine Personengruppe einklassifiziert werden, z. B. zu den Männern.

Auch können ggf. für eine Person mehrere Sprachproben hinterlegt sein. Selbstverständlich kann es vorgesehen sein, dass in oder für das Telekommunikationssystem/die Sprachbox eine Vielzahl von Sprachproben hinterlegt werden die verschiedenen Personen zugeordnet sind, wenn z.B. eine Vielzahl unterschiedlicher Dienste für die jeweiligen Personen aktivierbar sein sollen.

Als aufwendig kann es sich ggf. gestalten, die Sprachproben für eine Vielzahl von zu unterscheidenden Personen zusammenzustellen und z.B. in eine Datenbank, insbesondere in Verbindung mit weiteren Daten wie z.B. dem Namen der Person oder den zu aktivierenden Dienst, einzustellen.

Um diesen Aufwand gering zu halten, kann es beispielsweise vorgesehen sein, dass eine zu einem früheren Zeitpunkt auf der Sprachbox hinterlassene Sprachnachricht eines Anrufers zumindest ausschnittsweise als Sprachprobe in die Datenbank eingestellt wird. Hierfür kann bervorzugt die Sprachprobe durch den Nutzer des Systems / der Sprachbox insbesondere in Verbindung mit weiteren Daten an die Datenbank übermittelt werden.

Dies wird im Wesentlichen durch den Besitzer des Systems /der Sprachbox, also im Regelfall den Angerufenen erfolgen. Die Speicherung der Sprachproben kann z.B. geräteintern erfolgen oder wenn die Datenbank netzintern oder an einem anderen Ort als das System/ die Sprachbox betrieben wird auch über ein Telekommunikationnetz. Z.B. kann die Sprachprobe insbesondere mit weiteren Daten als Datenpaket, wie z.B. eine SMS oder MMS, an die Datenbank gesendet werden, so dass z.B. ein Bild (z.B. Foto der Person) zur Stimme zugeordnet werden kann.

Erfindungsgemäß kann es hierfür vorgesehen sein, dass jedesmal wenn ein bislang nicht erfasster Anrufer eine Sprachnachricht in dem System / der Sprachbox hinterlassen hat ,der Angerufene z. B. beim Abhören der Nachricht gefragt wird, ob aus der Nachricht eine Sprachprobe genommen und diese in die Datenbank eingestellt werden soll. Sofern die Übernahme in die Datenbank gewünscht ist, kann es vorgesehen sein, dass der Nutzer weitere Daten wie Name, Kennziffern oder beliebige Informationen der Sprachprobe hinzufügt und so allmählich die Datenbank aufgebaut wird.

So kann es auch vorgesehen sein, dass bei einer erstmaligen Inbetriebnahme der Erkennungsfunktion alle Sprachnachrichten, die in dem System / der Sprachbox aktuell gespeichert sind zumindest zum Teil ggf. mit weiteren Information in die Datenbank eingestellt werden. Diese weiteren Informationen können z.B. auch den Dienst kennzeichnen, der bei Erkennung der dem Sprachprofil zugeordneten Person aktiviert werden soll.

Gemäß der Erfindung kann es ergänzend zu vorgenannten Ausführungen vorgesehen sein, dass mehrere Sprachproben zu einer Gruppe zusammengefasst werden. So kann z.B. ein bestimmter ausgewählter bzw. auswählbarer Dienst aktiviert werden, wenn eine Erkennung einer Person aus der Gruppe stattgefunden hat. Auf diese Art und Weise muß nicht für jede hinterlegte Sprachprobe ein zu aktivierender separat Dienst programmiert werden.

Auch kann es vorgesehen sein, dass einer einezelnen Sprachprobe oder auch einer Gruppe von Sprachproben eine Anschlußkennung (z.B. CLI, HLR, IP-Adresse) eines Telekommunikationsanschlusses oder -gerätes zugeordnet wird. Hierdurch kann verhindert werden, dass bei einem Anruf, der bei dem erfindungsgemäßen System / der Sprachbox einläuft alle gespeicherten Sprachproben die hinterlegt sind auf eine Übereinstimmung zu prüfen sind oder dass zumindest eine Reihenfolge der Prüfung bestimmt wird, wobei Sprachproben mit einer höheren Übereinstimmungswahrscheinlichkeit zuerst geprüft werden.

Übermittelt der Anrufer z. B. eine Netzkennung, so kann eine Vorselektion der zu prüfenden Sprachproben erfolgen, da bestimmte Wahrscheinlichkeiten bestehen, dass von einem bestimmten Anschluß oder von einem bestimmten Gerät nur eine bestimmte Person oder zumindest nur eine bestimmte Gruppe von Personen anrufen wird. Durch diese erfindungsgemäße Ausgestaltung kann gerade bei sehr umfangreichen Datenbanken eine schnellere Prüfung erfolgen.

Das obenbeschriebene Verfahren kann in jedem Telekommunikationssystem eingesetzt werden, welches wenigstens ein Telekommunikationsnetz und wenigstens einen Datenspeicher, eine Verarbeitungseinheit und einen Dialog umfasst und so z.B. als Sprachbox ausgebildet sein kann. Hierbei ist es unerheblich, ob das System / die Sprachbox netzintern vom Telekommunikationsdienstleister bereitgestellt wird oder der Netzkunde das System / die Sprachbox als separates netzexternes Gerät, z. B. als Anrufbeantworter betreibt.

Eine Anwendung ist nicht nur im privaten Bereich gegeben, sondern gerade im geschäflichen Bereich, z. B. bei Callcentern etc. wo eine Selektion der Anrufer erfolgen soll. Z.B. können VIP- bzw. Premiumkunden eines Dienstleisters nach einer Erkennung bevorzugt behandelt werden, z.B. durch sofortige Weitervermittlung zu einem Ansprechpartner, wohingegen normale, evtl. umsatzschwächere Kunden, Kunden mit dementsprechenden Servicelevel oder Firmenphilosophie in eine Warteschlange eingereiht werden.

Stand der Technik und ein Ausführungsbeispiel der Erfindung sind in den nachfolgenden Figuren dargestellt. Es zeigen:
Figur 1: den Stand der Technik
Figur 2: ein Ausführungsbeispiel der Erfindung

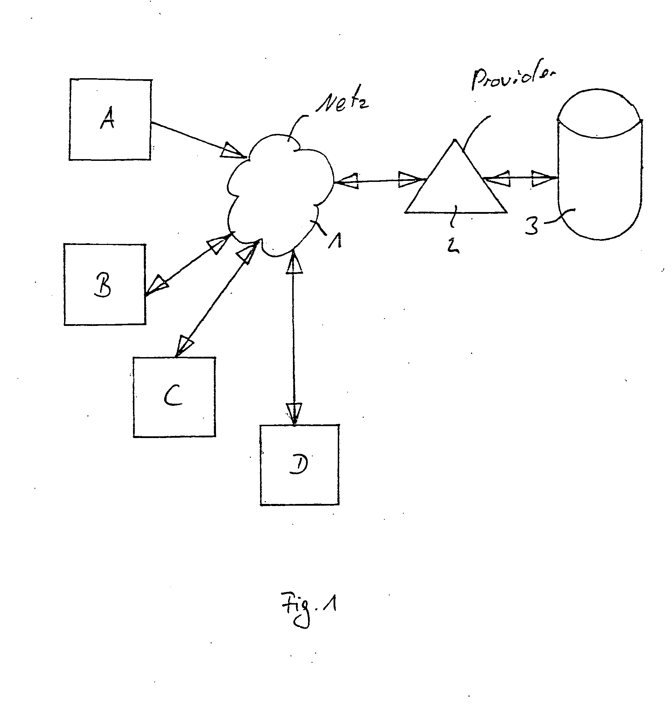

Die Figur 1 zeigt das Verfahren zu Steuerung von Sprachboxen gemäß dem Stand der Technik.

Von einem Telekommunikationsdienstleister wird ein Telekommunikationsnetz 1 betrieben. An dieses Telekommunikationsnetz 1 sind mehrere Kunden A,B,C und D angeschlossen. Der Kunde A gibt dem Netz 1 bekannt, dass er abwesend ist.

Aufgrund dieser Abwesenheitsmitteilung wird die Sprachbox 2 aktiviert, so dass Anrufe der Kunden A,B,C und D jeweils vom Netz 1 auf die Sprachbox 2 geleitet werden, die aus einer Datenbank 3 einen Ansagetext abruft und diesem Ansagetext dem betreffenden Anrufer vorspricht. Der Ansagetext kann vorher vom abwesenden Kunden A in der Datenbank hinterlegt sein. Gemäß dem Stand der Technik erhalten alle anrufenden Kunden B,C und D von der Sprachbox bei Abwesenheit des Kunden A denselben Ansagetext, da keine personenbezogene Individualisierung möglich ist.

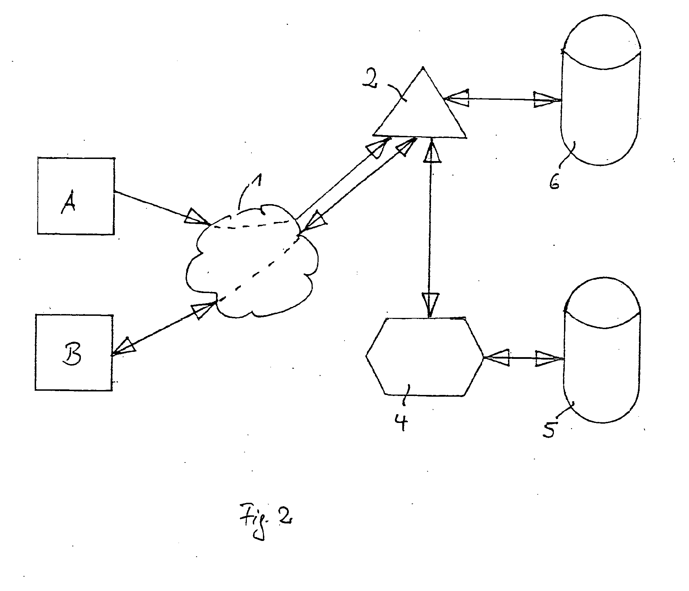

Die Figur 2 zeigt ein Ausführungsbeispiel der Erfindung, wobei exemplarisch nur Kunde A und B dargestellt sind. Dem Kunden A ist über das Netz 1 eine Sprachbox 2 zugeordnet. Zum Betrieb und zur Steuerung der Sprachbox 2 ist ein Trust-Center 4 vorgesehen, dem der Kunde A bereits Sprachproben mehrerer möglicher Anrufer übermittelt hat, die in der Datenbank 5 des Trust-Centers 4 abgelegt sind.

Aufgrund einer Abwesenheitsmitteilung des Kunden A an das Netz 1 ist die Sprachbox 2 aktiviert. Ein Anruf des Kunden B läuft auf die Sprachbox auf, woraufhin ggf. nach einer Erstansage zumindest ein Ausschnitt einer gesprochenen Phrase des Kunden B an das Trustcenter 4 übermittelt wird. Dieses Trustcenter vergleicht die übermittelte Sprachphrase mit den vorliegenden Sprachproben und stellt im vorliegenden Fall beispielsweise eine Übereinstimmung fest.

Es kann sodann vom Trust-Center 4 die Mitteilung der Übereinstimmung an die Sprachbox 2 erfolgen, die somit Kenntnis davon erhält, dass Kunde B anruft. Es kann sodann die Sprachbox in der Datenbank 6, die der Sprachbox 2 zugeordnet ist, nachsehen, ob für Kunde B eine Nachricht hinterlassen wurde. Diese gefundene Nachricht wird die Sprachbox trotz Abwesenheit des Kunden A dem Kunden B übermitteln. Aufgrund der stattgefundenen Erkennung des Kunden B erhält nur dieser die personenbezogene Nachricht, jedoch kein anderer Anrufer.

Die Datenbanken 5 und 6 können auch zusammen in einer Datenbank realisiert sein. Statt der individuellen Ansage kann auch ein beliebiger anderer Dienst, z.B. eine Weitervermittlung des Kunden B an einen alternativen Anschluß des Kunden A erfolgen, z.B. an dessen Mobilfunknummer, wohingegen alle anderen Anrufer einen Standarttext als Abwesenheitsmitteilung erhalten.

Statt der in Figur 2 dargestellten netzbasierten Lösung können die Sprachbox 2 und Datenbanken 5 und 6 auch in einem Gerät realisiert sein, dass der Kunde als Endgerät an seinem Telekommunikationsanschluß betreibt. In diesem Fall wird ein Trust-Center 4 nicht benötigt, da der Kunde A seine Daten selbst verwaltet.

## Patentansprüche

1. Verfahren zur Steuerung eines Telekommunikationssystems in/an einem Telekommunikationsnetz, **dadurch gekennzeichnet, dass** bei einer Kommunikationsverbindung zwischen einem Anrufer und dem Telekommunikationssystem der Anrufer anhand seiner Stimme/Sprache erkannt wird und in Abhängigkeit der Erkennung ein Dienst aktiviert wird.

2. Verfahren nach Anspruch 1, **dadurch gekennzeichnet, dass** das Telekommunikationssystem eine Sprachbox bildet.

3. Verfahren nach einem der vorherigen Ansprüche **dadurch gekennzeichnet, dass** aufgrund einer Erkennung ein personenbezogener Dienst, insbesondere in Abhängigkeit eines Service-/Erkennungsprofils, aktiviert wird.

4. Verfahren nach einem der vorherigen Ansprüche **dadurch gekennzeichnet, dass** ein Erkennen mittels Identifikation und/oder Verifikation und/oder Klassifikation der Stimme/Sprache erfolgt.

5. Verfahren nach einem der vorherigen Ansprüche **dadurch gekennzeichnet, dass** bei einer erfolgreichen Erkennung der Anrufer eine für ihn persönlich hinterlassene Nachricht übermittelt bekommt oder an den Nutzer des Telekommunikationssystem, insbesondere der Sprachbox weitervermittelt wird.

6. Verfahren nach einem der vorherigen Ansprüche **dadurch gekennzeichnet, dass** zur Erkennung die Sprache des Anrufers mit wenigstens einer in oder für das Telekommunikationssystem/die Sprachbox hinterlegten Sprachprobe verglichen wird.

7. Verfahren nach Anspruch 5, **dadurch gekennzeichnet, dass** wenigstens eine Sprachprobe in einer Datenbank gespeichert ist/wird.

8. Verfahren nach einem der vorherigen Ansprüche **dadurch gekennzeichnet, dass** eine zu einem früheren Zeitpunkt auf dem Telekommunikationsystem/der Sprachbox hinterlassene Sprachnachricht zumindest ausschnittsweise als Sprachprobe in die Datenbank eingestellt wird.

9. Verfahren nach einem der vorherigen Ansprüche **dadurch gekennzeichnet, dass** eine Sprachprobe durch den Nutzer des Telekommunikationssystems/der Sprachbox insbesondere in Verbindung mit weiteren Daten an die Datenbank übermittelt wird.

10. Verfahren nach einem der vorherigen Ansprüche **dadurch gekennzeichnet, dass** eine Sprachprobe einer Anschlußkennung (CLI, HLR, IP-Adresse) zugeordnet wird.

11. Verfahren nach einem der vorherigen Ansprüche **dadurch gekennzeichnet, dass** mehrere Sprachproben zu einer Gruppe zusammengefasst werden, insbesondere wobei einer Gruppe eine Anschlußkennung (CLI, HLR, IP-Adresse) eines Telekommunikationsanschlusses oder -gerätes zugeordnet wird.

12. Telekommunikationssystem umfassend wenigstens ein Telekommunikationsnetz, welches wenigstens eine Sprachbox umfasst, **dadurch gekennzeichnet, dass** ein Kommunikationsteilnehmer, insbesondere ein Anrufer, mittels einer einem Telekommunikationsanschluß zugeordneten Sprachbox anhand seiner Stimme identifizierbar ist und in Abhängigkeit der Identifizierung ein Dienst aktivierbar ist.
